(19) Europäisches Patentamt
European Patent Office
Office européen des brevets

(11) **EP 2 153 894 A1**

(12) **EUROPEAN PATENT APPLICATION**

(43) Date of publication:
**17.02.2010 Bulletin 2010/07**

(21) Application number: **08014006.4**

(22) Date of filing: **05.08.2008**

(51) Int Cl.:
*B01J 23/00* (2006.01)    *B01J 23/58* (2006.01)
*B01D 53/94* (2006.01)    *B01J 21/16* (2006.01)
*B01J 27/236* (2006.01)    *C01F 7/00* (2006.01)

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Süd-Chemie AG**
**80333 München (DE)**
• **Alma Mater Studiorum -Universita' di Bologna**
**40126 Bologna (IT)**

(72) Inventors:
• **Paulus, Martin, Dr.**
**83024 Rosenheim (DE)**

• **Holcomb, Dale**
**Louisville, Kentucky 40245 (US)**
• **Basile, Francesco**
**88100 Catanzaro (IT)**
• **Fornasari, Giuseppe**
**40141 Bologna (IT)**
• **Vaccari, Angelo**
**40127 Bologna (IT)**
• **Livi, Massimiliano**
**52100 Arezzo (IT)**

(74) Representative: **Stolmár, Matthias et al**
**Stolmár Scheele & Partner**
**Patentanwälte**
**Blumenstrasse 17**
**80331 München (DE)**

(54) **Catalyst for the reduction of nitrogen oxides in exhaust gas**

(57) The present invention relates to a catalyst for the reduction of nitrogen oxides in exhaust gas comprising a nitrogen storage material consisting of a Mg/Al mixed oxide with a potassium content in the range of 3 to 15 wt% further comprising a metal from the platinum group. Further the present invention relates to a process for preparing the catalyst.

**Figure 1**

**Description**

The present invention relates to a catalyst for the reduction of nitrogen oxides in exhaust gas comprising a nitrogen storage material consisting of a Mg/Al mixed oxide with a potassium content in the range of 3 to 15 wt% further comprising a metal from the platinum group. Further, the present invention relates to a process for preparing the catalyst.

In the field of gasoline engines, so-called lean burn engines have been developed in order to reduce fuel consumption, which are fueled with lean air/fuel mixtures when operating under partial load. A lean air/fuel mixture contains a higher concentration of oxygen than necessary for complete combustion of the fuel. The corresponding exhaust gases then contain an excess of the oxidizing components oxygen and nitrogen oxides ($NO_x$) compared to the reducing exhaust gas components carbon monoxide (CO), hydrogen and hydrocarbons (HC). Lean exhaust gas usually contains 3 to 15 vol.-% oxygen. However, during operation under load and full load, stoichiometric or even substoichiometric, i.e. rich, air/fuel mixtures are used even in lean burn engines.

Diesel engines on the other hand usually run under operating conditions with highly superstoichiometric air/fuel mixtures. Only in recent years have diesel engines been developed that can also be operated with rich air/fuel mixtures for short periods of time.

Due to the high oxygen content of the exhaust gases from lean burn engines, the nitrogen oxides contained therein cannot be continuously reduced to nitrogen in combination with a simultaneous oxidation of hydrocarbons and carbon monoxide by means of so-called three-way catalysts as is the case in stoichiometrically operated gasoline engines. Rather, with these catalysts a so-called temperature window for the reduction of the nitrogen oxides, which depends on the exhaust gas temperature, is observed. An increase in the exhaust gas temperature results in an initial increase in the nitrogen oxides conversion. At a certain temperature the conversion rate reaches a maximum and at higher temperatures the conversion rate recedes back to zero. Within the temperature window, the remaining hydrocarbons that are always still present in lean exhaust gas function as reducing agents for the nitrogen oxides.

The position and width of the temperature window as well as the maximum nitrogen oxide conversion within the temperature window depend on the formulation of the catalyst and the residual hydrocarbon content of the exhaust gas. Conventional three-way catalysts only show a low nitrogen oxides conversion within the temperature window. However, so-called HC-DeNOx catalysts were developed, which exhibit a maximum nitrogen oxides conversion in the temperature window of up to 60% at a temperature in the range of 180 to 250°C. The width of the temperature window is only about 50°C.

Despite the relatively high nitrogen oxide conversion rate within the temperature window, these catalysts only provide an average nitrogen oxide conversion of less than 30% throughout the standardized driving cycle MVEG-A.

In order to improve this situation, so-called nitrogen oxides storage catalysts were developed which store the nitrogen oxides contained in lean exhaust gas in the form of nitrates.

The mechanism of nitrogen oxides storage catalysts is described in detail in the SAE document, SAE 950809. Accordingly, nitrogen oxides storage catalysts consist of a catalyst material that commonly is applied on an inert, ceramic or metal honeycomb carrier, a so-called carrier, in the form of a coating. The catalyst material comprises the nitrogen oxides storage material and a catalytically active component. The nitrogen oxides storage material in turn consists of the actual nitrogen oxides storage component, deposited in highly dispersed form on a support material.

Basic alkali metal oxides, alkaline earth metal oxides and rare earth metal oxides, and in particular barium oxide, which react with nitrogen dioxide to form the corresponding nitrates, are predominantly used as storage components. It is known that in air these materials are mostly present in the form of carbonates and hydroxides. These compounds are also suitable for storing the nitrogen oxides. Thus, whenever basic storage oxides are mentioned in the present invention, this also includes the corresponding carbonates and hydroxides.

Noble metals of the platinum group are typically used as catalytically active components, which as a rule are deposited on the support material together with the storage component. Active aluminum oxide with a large surface area is usually used as support material. However, the catalytically active components can also be applied on a separate support material such as for example active aluminum oxide.

It is the task of the catalytically active components to convert carbon monoxide and hydrocarbons to carbon dioxide and water in the lean exhaust gas. Furthermore, they should oxidize the nitrogen monoxide portion of the exhaust gas to nitrogen dioxide so that it can then react with the basic storage material to form nitrates (storage phase). An increasing incorporation of the nitrogen oxides in the storage material causes a decrease in the material's storage capacity, which has to be regenerated from time to time. For this purpose, the engine is operated for a short period of time with stoichiometric or rich air/fuel mixtures (referred to as regeneration phase). In the reducing conditions of the rich exhaust gas, the formed nitrates decompose to nitrogen oxides NO and, with the use of carbon monoxide, hydrogen and hydrocarbons as reducing agents, are reduced to nitrogen while water and carbon dioxide are formed. These catalysts are therefore also referred to as Nitrogen-Storage-Reduction (NSR) Catalyst.

During the operation of the nitrogen oxides storage catalyst, the storage phase and the regeneration phase regularly alternate. Usually, the storage phase lasts between 60 and 120 seconds, while the regeneration phase is completed in less than 20 seconds.

Nitrogen oxide storage catalysts allow considerably higher nitrogen oxides conversion rates in a larger temperature window than HC-DeNO$_x$ catalysts. Their nitrogen oxides conversions meet the exhaust limits according to the Euro IV standard, the introduction of which is planned for 2005.

However, in order to improve the safety of operation and long-term stability of these catalysts, it is necessary to increase their thermal stability, widen their temperature window and further improve the nitrogen oxides conversions attainable in that window.

Based on the foregoing, there is a need in the art for a catalyst for the prevention of nitrogen oxides in the exhaust gas from combustion engines, which has an improved thermal stability, a wider temperature window and a higher nitrogen oxides conversion rate in this window than conventional nitrogen oxides storage catalysts.

Hydrotalcites are metal hydroxides having a layer lattice and belonging to the group of anionic clay minerals. Metal hydroxides are important precursors for the production of metal oxides used for instance as raw materials for refractories, ceramics, and supports for heterogeneous catalysts. In nature, metal hydroxides predominantly occur in the form of mixed metal hydroxides. There are numerous clay minerals that can be characterised by their layer lattice. The great majority of clay minerals are cationic ones. In these metal hydroxides, cations, e.g. Na$^+$, Ca$^{2+}$, etc., are located between the negatively charged layers. In anionic clay minerals which are far less common, anions are located between the positively charged layers of the metal hydroxide. A large number of these anionic clay minerals are hydroxides of metals of the main group, namely magnesium and aluminium, and hydroxides of transition metals, such as nickel, chromium, zinc, etc. The structure of these clay minerals can be derived from the brucite structure of magnesium hydroxide Mg(OH)$_2$. In this structure, some of the divalent Mg(OH)$_6$$^{4-}$ octahedra are replaced by Al(OH)$_6$$^{3-}$ octahedra. Examples of these minerals are meixnerite having the idealised unit cell formula Mg$_6$Al$_2$(OH)$_{18}$·4 H$_2$O and hydrotalcite (Mg$_6$Al$_2$(OH)$_{16}$CO$_3$·4 H$_2$O). The magnesium : aluminium atomic ratios can typically be varied between 1.2 and 4.0. The metal hydroxide octahedra share adjacent edges to form layers. In addition to water, interstitial anions required for balancing the charge are located between the layers. The anion nature can be simple, e.g. OH$^-$, CO$_3$$^{2-}$, Cl$^-$ or SO$_4$$^{2-}$, or complex, as for instance in large, organic or inorganic anions.

The use of hydrotalcite as part of a NSR catalyst was proposed in US 6,858,193 where the hydrotalcite acts as support for additional storage material like BaO$_2$, Ceria/Zirconia, La$_2$O$_3$ etc.

The problem underlying the present invention was therefore to provide a further catalyst useful in the reduction of nitrogen oxides in exhaust gas with a simpler structure and less components.

The underlying problem of the invention is solved by a catalyst for the reduction of nitrogen oxides in exhaust gas comprising a nitrogen storage material consisting of a Mg/Al mixed oxide with a potassium content in the range of 3 to 15 wt%.

Surprisingly it was found that the catalyst according to the invention does not need further storage material like BaO, Ce/ZrO$_2$ etc. as discussed in the prior art. Further, the catalyst according to the invention has a better stability with respect to activity after several regeneration steps (see example). Further, it is much more sulfur-resistant than prior art NSR-catalysts. The improvement in activity over prior-art catalyst is in the range of 10-30 %, as exemplified in table 5 below.

Unexpectedly, the catalyst according to the invention can oxidize soot and reduce NO$_x$ simultaneously, as shown below.

Therefore, it can be used as a catalyst for NO$_x$ reduction and as a DPF (diesel particulate filter) coating at the same time as well. The present catalyst can therefore be used as a coating on a wall flow filter as known in the art.

Preferably the catalyst according to the invention has a Mg/Al ratio in the Mg/Al mixed oxide in the range of from 1.5 to 3.5.

It is further advantageous if the catalyst has a BET surface of >50 m$^2$/g which is beneficial for the progress of the catalytic reaction(s), since a higher surface leads to a faster reaction rate.

In most preferred embodiments of the present invention, the Mg/Al mixed oxide material is a hydrotalcite compound. The term "hydrotalcite" refers, as already mentioned above, generally to Hydrotalcite-type mixed Mg/Al oxide compounds, wherein the basis compound "hydrotalcite" has the general formula Mg$_6$Al$_2$(OH)$_{16}$CO$_3$·4H$_2$O. A comprehensive survey can be found in: Allmann, R. and H.P. Jepsen (1969) Die Struktur des Hydrotalkits. Neues Jahrb. Mineral., Monatsh., 544-551.

Synthetic hydrotalcite-like layered double hydroxide (LDHs) compounds can be used in the invention as well. LDHs are mixed metal hydroxides with the general formula [M$_{1-x}$$^{+2}$M$_x$$^{+3}$(OH)$_2$][Am]$_{x/m}$·nH$_2$O where M$^{+2}$ and M$^{+3}$ represent divalent and trivalent cations at the octahedral sites within the hydroxyl layers, x is equal to the ratio of M$^{+3}$/(M$^{+2}$ + M$^{+3}$) with a value varying in the range of 0.17 to 0.50 and A-m is an exchangeable interlayer anion. LDHs have the ability to accommodate a large variety of divalent and trivalent cations and the formation of well-dispersed mixed oxides upon controlled thermal decomposition.

Specifically preferred formulae for the hydrotalcite compounds of the catalyst of the present invention are selected from the group consisting of Mg$_6$Al$_2$(OH)$_{18}$· 4 H$_2$O, Mg$_6$Al$_2$(CO$_3$) (OH)$_{16}$ ·4H$_2$O, Mg$_{0.67}$Al$_{0.33}$ (OH)$_2$Cl$_{0.33}$

·0.6H$_2$0, Mg$_{0.69}$Al$_{0.31}$(OH)$_{2.013}$(CO$_3$)$_{0.15}$·0.30H$_2$O, Mg$_{0.74}$Al$_{0.26}$(OH)$_2$(CO$_3$)$_{0.13}$·0.39H$_2$O, Mg$_{0.67}$Al$_{0.33}$(OH)$_2$ (CO$_3$)$_{0.16}$·0.69H$_2$O, and Mg$_{0.66}$Al$_{0.34}$(OH)$_2$(CO$_3$)$_{0.17}$·0.70H$_2$O. As already stated above, these compounds contain potassium as an interlayer cation in accordance with the present invention.

The catalyst according to the invention comprises further a metal from the platinum group, which is preferably present in an amount of 0.2 to 2 wt% based on the total weight of the catalyst. Suitable platinum group metals are Pt, Pd, Ir, Rh, and mixtures thereof, especially preferred is platinum.

The problem is further solved by a process for the preparation of the catalyst according to the invention, wherein the process comprises the steps of

    a) providing an aqueous KOH solution
    b) addition of Al(OH)$_3$
    c) addition of a MgCO$_3$ suspension
    d) stirring
    e) isolating the product

Surprisingly, it has been found that the provision of the KOH solution in the first step leads to the desired product containing 3 to 15 wt% potassium as intercalating cation. The process according to the invention is different from hydrotalcite syntheses in prior art, where the intercalating cation was introduced only after synthesis of the hydrotalcite per se.

Preferably step b) of the process is carried out at a temperature in the range of from 60 to 90°C preferably 70 - 80°C.

Al(OH)$_3$ is added preferably added as a solid to avoid side reactions due to solvation in water, where a number of hydrated Al-hydroxo species with different stoichiometric compositions would be present.

Typically, the isolation of the product is carried out by filtering off the resulting suspension, but equivalent means like centrifuging etc. are also within the scope of a person skilled in the art.

It is preferred that the stirring step d) is carried out in a temperature range from 70 to 100°C to accelerate the reaction process and to improve the yield of the reaction.

The KOH solution in step a) has preferably a concentration of 10 - 60 Vol%. A concentration of lower than 10 Vol% would not lead to the desired product, the upper limit is given by the maximum concentration of KOH in water. Especially preferred is a concentration of ca. 40-50 %.

The molar ratio of the starting materials Al(OH)$_3$/KOH/MgCO$_3$ is from 1/0.5/0.9 to 1/2.1/3, especially preferred is a ratio of 1/1.6/2.

After isolation of the filtered product it is dried at ca. 70-90°C and subsequently impregnated by preferably the incipient wetness method with an aqueous solution of a metal salt from the platinum group, preferably a nitrate, amine, carboxylate, chloride or bromine salt. After impregnation, the product is calcined in a temperature range of from 600 to 900°C to yield the catalytically active species.

The invention is further illustrated by way of figures and the examples which are not meant to be limiting the scope of the present invention.

Fig 1    shows the NSR NO-He capacity during sequences of 60 cycles for a catalyst according to the invention..

Fig 2    shows the NSR NO/CO$_2$ capacity in the presence of CO$_2$ during sequences of 60 cycles for a catalyst according to the invention.

Fig 3    shows the NSR NO-He capacity in the presence of CO$_2$ during sequences of 60 cycles for a catalyst of prior art.

Fig 4    shows the results of the soot oxidation over a catalyst according to the invention

Fig 5    shows the soot oxidation for the catalysts C1, C2, C3 and the support

**<u>Experimental</u>**

**Example 1:**

***General preparation of a the Mg|Al mixed oxide of the catalyst according to the invention.***

A K-aluminate solution was prepared by slowly adding 0,91 mole Al(OH)$_3$ in solid form to a KOH solution (1,6 mole KOH as an aqueous solution with 50% KOH content) at a temperature of 60 to 90 °C preferably 70 - 80°C. It is understood that the potassium content can be varied by variation of the KOH concentration in the KOH-solution. Deionized water (111 mole) was filled in a 200 l reactor and $MgCO_3$ (2 mole) was added slowly under stirring. This suspension was heated by a steam lance to 90°C and mixed with the K-aluminate solution over a period of < 30 min under gentle stirring. After addition, the mixture was stirred at 90°C for one hour. The resulting suspension was then filtered by a filter press without washing the material to obtain the desired potassium containing Mg/Al mixed oxide.

The material had a potassium content of 4,7 % and a specific surface area of 75 $m^2/g$. The material was characterized by XRD as potassium containing "Meixnerite" $Mg_6Al_2(OH)_{18} * 4 H_2O$ wherein $K^+$ is present as an interlayer cation in the form of an oxide or carbonate.

**Example 2:**

*Catalyst C1:*

Hydrotalcite (HT)-based 1.0 wt. % Pt catalysts (1Pt/Hydrotalcite) were obtained starting from hydrotalcite HT PP6889 (ratio Mg/Al = 2.16 potassium content: 10.8 wt%); prepared in accordance with Example 1, but with different KOH concentration precursors and heated under $N_2$ flow at 650°C (PP6889-650). The hydrotalcite precursors were impregnated with 1.0 wt. % Pt by incipient wetness impregnation using an aqueous $Pt(NH_3)_2(NO_2)_2$ solution. After impregnation, the catalysts were dried at 80°C overnight and then heated under $N_2$ flow at 550°C for 12 h. The surface area of the catalyst C 1 was 52 $m^2/g$.

**Comparative Example 1:**

*Preparation of Catalyst C2:*

A conventional storage catalyst was prepared, comprising a storage material (17 wt. % Ba based on the total weight of the catalyst), the noble metal (1 wt.% Pt) over commercial γ-$Al_2O_3$. This reference catalyst (17Ba-1Pt/γ-$Al_2O_3$) is also widely referred to as the "Toyota-type catalyst" [P. Engström, et al. Appl. Catal. 22 (1999) L241].

The catalyst was prepared according to literature procedures [SAE Technical Paper 2002-010057 (2002).] with a commercial γ-$Al_2O_3$ (Sasol, D) support and was impregnated by the incipient wetness method, using at first a $Pt(NH_3)_2$ $(NO_2)_2$ solution and then the $Ba(CH_3COO)_2$ solution. After each impregnation the sample was dried at 90°C overnight and then heated under $N_2$ flow (100 ml/min) at 550°C for 12 h. The surface area of the catalyst C2 was 144 $m^2/g$.

**Comparative Example 2:**

*Preparation of Catalyst C3:*

Catalyst C3 was prepared from a HT-based Pt (1 wt.% Pt)catalyst , obtained from a commercial HT precursor ($Mg^{2+}:Al^{3+}$ = 66:34 as atomic ratio, by CONDEA (D); surface area: 214 $m^2/g$ [according to EP 807086 A1] and heated at 650°C prior to addition of the Pt component (sample named HT-C650). This was added by incipient wet impregnation using a $Pt(NH_3)_2(NO_2)_2$ solution. After addition of Pt the sample was dried at 90°C overnight, and then heated at 550°C under $N_2$ for 12 h. The surface area of the catalyst C3 was 160 $m^2/g$.

The final powders of the C1, C2 and C3 catalysts were formed to particles with a particle size in the range of 0.250-0.600 mm after grinding and sieving, which were then activated at 350°C for 1 h in a 100 ml/min flow of $H_2$ in He (20:80 v/v), followed by mild re-oxidation at 80°C for 1 h in a 100 ml/min flow of $O_2$ in He (20:80 v/v).

**NO conversion tests**

The NO conversion (during all cycles) was calculated by the following formula:

$$\text{NO conversion (\%)} = [(\text{ppm NO}_{\text{In}} - \text{ppm NO}_{\text{out}})/\text{NO}_{\text{In}} \text{ ppm}] * 100$$

The NO conversion was calculated every 10 cycles (10th, 20th, 30th, 40th, 50th, 60th). Thereby it was possible to analyse the NO conversion of the catalyst versus time at the same temperature.

*TEST 1 (NO in He)*

0.5085 grams of C1 (0.250-0.600 mm sized particles) were placed in a quartz flow micro-reactor and heated under He flow at the temperature of the reaction (Table 1).

The NSR activity was studied using a series of cyclic sequences of feed changes from lean conditions (120 seconds with 5% $O_2$, 990 ppm NO, remaining He) to rich conditions (18 seconds with 2.5% $H_2$, 990 ppm NO, remaining He) for a total flow of 200 ml/min.. Each catalytic test was repeated sixty (60) times at the same temperature (Table 1).

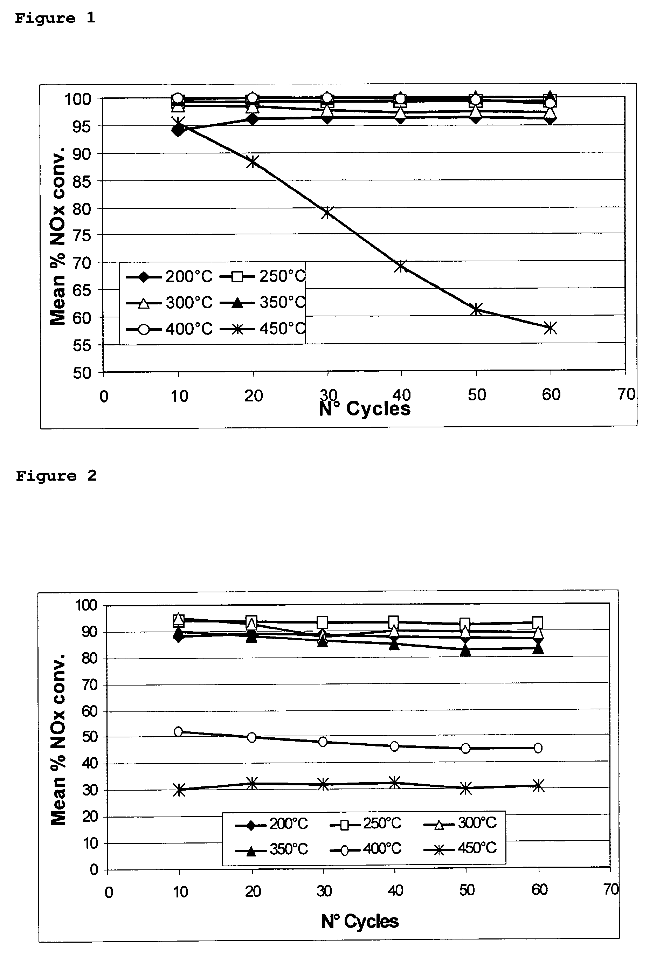

Figure 1 illustrates the mean % NO conversion (from the 10th cycle to the 60th cycle) showing that the sample did not change conversion during time demonstrating a complete reduction of the $NO_x$ stored.

The C1 catalyst showed from 200 to 400°C a high conversion with values higher than 90%, reducing the NO stored to $N_2$ and $H_2O$ without producing $NH_3$. When the temperature increased (T > 400°C), the conversion decreased because the sample during the reduction step desorbed NO (fig. 2).

*Table 1: Test conditions for NO conversion tests in test 1*

|  | TEMPERATURE | *CYCLES* |
|---|---|---|
| **Test 1** | **200°C** | **60** |
|  | **200-250°C** (ramp 5°C/min.) | **4** |
|  | **250°C** | **60** |
| **Test 2** | **300°C** | **60** |
|  | **300-350°C** (ramp 5°C/min.) | **4** |
|  | **350°C** | **60** |
| **Test 3** | **400°C** | **60** |
|  | **400-450°C** (ramp 5°C/min.) | **4** |
|  | **450°C** | **60** |

**Test 2 (NO + CO$_2$ in He)**

**Catalysts C1 and comparative example catalyst C2**

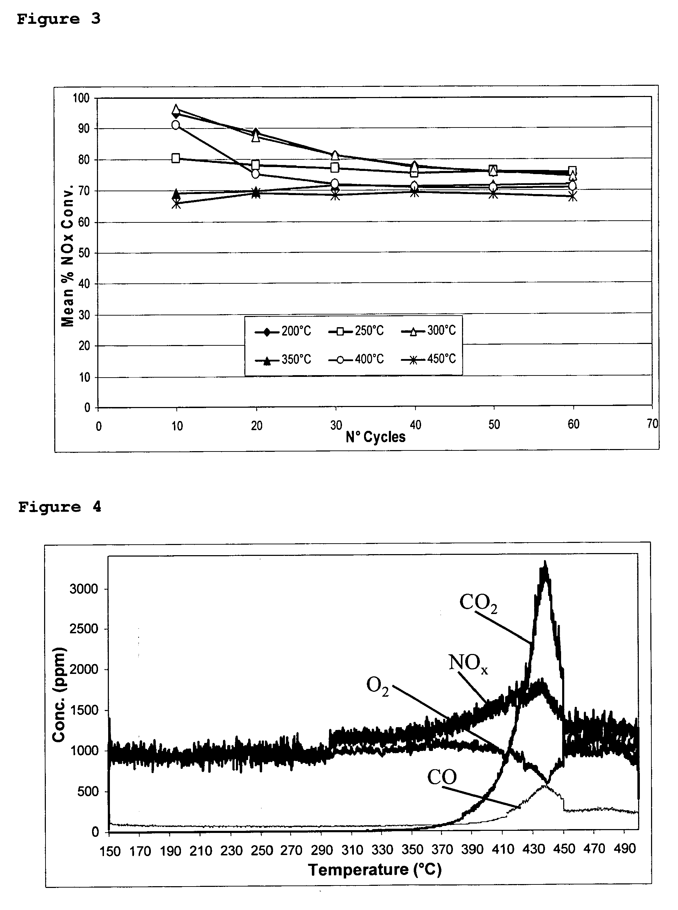

The storage capacity of the catalysts C1 (Fig. 2) and C2 (Fig. 3) were compared as a function of the reaction temperature.

0.5085 grams of C1 or 0,4660 grams of C2 (0.250-0.600 mm particles) were placed in the quartz flow micro-reactor and heated under He flow at the temperature of reaction (Table 2). The NSR activity was studied in presence of CO2 using a series of cyclic sequences of feed changes from lean conditions (120 seconds with 5% O2, 1008 ppm NO, 10,8 CO2, remaining He) to rich conditions (18 seconds with 2.5% H2, 1008 ppm NO, 10,8 CO2, remaining He) for a total flow of 200 ml/min.. Each catalytic test was repeated sixty (60) times at the same temperature (Table 2).

Figure 2 shows the mean % NO conversion (from the 10th cycle to the 60th cycle) showing that between 200 and 350°C, the catalyst did not show a saturation with high NO conversion (85-95%) and a high efficiency reducing all the NOx adsorbed species to $N_2$ and $H_2O$.

At 400°C and 450°C, the catalyst did not adsorb all the NO fed (mean % NO conversion around 50% and 30% respectively), because in the presence of $CO_2$ the storage capacity of C1 decreased compared to example 1. The storage capacity values are a function of the reaction temperature, even if the presence of $CO_2$, slightly modifies the storage behaviour.

The comparative catalyst C2 showed a lower NSR activity between 200 and 350°C.

*Table 2: Test conditions for NO conversion test in Test 2*

|  | TEMPERATURE | *CYCLES* |
|---|---|---|
| **Test 1** | **200°C** | **60** |
|  | **200-250°C** (ramp 5°C/min.) | **4** |
|  | **250°C** | **60** |

(continued)

|  | TEMPERATURE | CYCLES |
|---|---|---|
| Test 2 | 300°C | 60 |
|  | 300-350°C (ramp 5°C/min.) | 4 |
|  | 350°C | 60 |
| Test 3 | 400°C | 60 |
|  | 400-450°C (ramp 5°C/min.) | 4 |
|  | 450°C | 60 |

### Test 3 (NO + CO$_2$ + SO$_2$ in He)

#### 3.1 Catalytic behaviour of catalyst C1:

0.5085 grams of C1 (0.250-0.600 mm particles) were placed in the quartz flow micro-reactor and heated under He flow at the reaction temperature (Table 3).

Higher concentrations of SO$_2$ and short time of reduction were fed in our tests in order to achieve a faster and more significant poisoning.

The deactivation of the C1 catalyst by SO$_2$ was studied mainly with regard to the influence of SO$_2$ during several cycles of NSR at different temperatures.

Uptake experiments were carried out using NO (1004 ppm), CO$_2$ (13.3 %) and SO$_2$ (63 ppm) in He monitoring the gas composition at the reactor outlet by mass spectrometry and chemiluminescence.

The NSR activity was studied without SO$_2$, then feeding SO$_2$ using a series of cyclic sequences of feed changes from lean conditions [120 seconds with 5% O$_2$, NO (1004 ppm), CO$_2$ (13.3 %) and SO$_2$ (63 ppm) remaining He] to rich conditions [15 seconds with 2.5 % H$_2$, NO (1004 ppm), CO$_2$ (13.3 %) and SO$_2$ (63 ppm) remaining He] and the temperature was changed from 200 to 400°C. For each isotherm (200, 250, 300, 350 and 400°C) the cycle was repeated 34 times. At the end the NSR activity was again analysed without the SO$_2$ presence.

The C1 catalysts showed good catalytic behaviour during SO$_2$ exposure with a very good mean NO$_x$ conversion (Table 4), with very constant behaviour before, during and after SO$_2$ exposure.

*Table 3: Test conditions for NO conversion in Test 3*

|  | Temperature | Cycles | Temperature | Cycles | Temperature | Cycles |
|---|---|---|---|---|---|---|
| Test 1 before SO$_2$ | 200°C | 34 | 250-300°C (ramp 5°C/min.) | 4 | 350°C | 34 |
|  | 200-250°C (ramp 5°C/min.) | 4 | 300°C | 34 | 350-400°C (ramp 5°C/min.) | 4 |
|  | 250°C | 34 | 300-350°C (ramp 5°C/min.) | 4 | 400°C | 34 |
| Test 2 with SO$_2$ | Temperature | Cycles | Temperature | Cycles | Temperature | Cycles |
|  | 200°C | 34 | 250-300°C (ramp 5°C/min.) | 4 | 350°C | 34 |
|  | 200-250°C (ramp 5°C/min.) | 4 | 300°C | 34 | 350-400°C (ramp 5°C/min.) | 4 |
|  | 250°C | 34 | 300-350°C (ramp 5°C/min.) | 4 | 400°C | 34 |

(continued)

| | Temperature | *Cycles* | *Temperature* | *Cycles* | *Temperature* | *Cycles* |
|---|---|---|---|---|---|---|
| | **Temperature** | **Cycles** | **Temperature** | **Cycles** | **Temperature** | **Cycles** |
| **Test 3 after SO$_2$** | **200°C** | **34** | ***250-300°C*** (ramp 5°C/min.) | 4 | **350°C** | **34** |
| | ***200-250°C*** (ramp 5°C/min.) | 4 | **300°C** | **34** | ***350-400°C*** (ramp 5°C/min.) | 4 |
| | **250°C** | **34** | ***300-350°C*** (ramp 5°C/min.) | 4 | **400°C** | **34** |

*Table 4: Mean NO$_x$ conversion (%) at different temperatures and feedings for C1.*

| C1 | Mean NO$_x$ conversion (%) | | | | |
|---|---|---|---|---|---|
| **Test** | **200°C** | **250°C** | **300°C** | **350°C** | **400°C** |
| **NO + CO$_2$ before SO$_2$** | **54** | **50** | **48** | **33** | **14** |
| **NO + CO$_2$ with SO$_2$** | **54** | **50** | **49** | **33** | **14** |
| **NO + CO$_2$ after SO$_2$** | **58** | **59** | **56** | **42** | **34** |

### 3.2 Comparison of the catalysts C1 and C2:

The storage capacity of the catalysts C1 and C2 were compared as a function of the reaction temperature. In the tests high concentration of SO$_2$ and short time of reduction were used in order to achieve a faster and more significant poisoning. The tests were carried out in presence of SO$_2$ and in the end without SO$_2$ and the results were compared with those obtained with the fresh catalysts.

The activity is expressed as % variation of mean NO$_x$ conversion using the activity of the fresh catalyst as a reference:

$$\% \text{ variation} = \frac{\text{Mean NO}_x \text{ conversion (\%) [with or after SO}_2\text{]}}{\text{Mean NO}_x \text{ conversion (\%) [before SO}_2\text{]}} *100$$

Mean NOx conversion: = [NO ads/NO feed]*100 [during 135 sec. of each the cycle]; NO ads = NO feed - NO des.

0.50 grams of C1 or grams of C2 (0.250-600 mm particles) were placed in the quartz flow micro-reactor and heated under He flow at temperature of reaction (Table 1).

The NSR activity was studied using a series of cyclic sequences of feed changes from lean conditions [120 s: 5% O$_2$, NO (1004 ppm), CO$_2$ (13.3 %) and SO$_2$ (63 ppm) remaining He] to rich conditions [15 s: 2.5 % H$_2$, NO (1004 ppm), CO$_2$ (13.3 %) and SO$_2$ (63 ppm) remaining He] and the temperature was changed is the range 200-400°C. For each isotherm (200, 250, 300, 350 and 400°C) the cycle was repeated 34 times. At the end the NSR activity was again analysed without the SO$_2$ presence.

The results are reported in table 5. The C1 showed a constant behaviour; during and after SO$_2$ exposure it was possible to determine the same mean NO$_x$ conversion value. While the C2 showed a very high deactivation and only after during the test without SO$_2$ at high temperature (350-400°C) the catalyst showed the same mean NO$_x$ conversion.

*Table 5: % variation at different temperature and feedings for C1 and C2.*

| C1 | % variation | | | | |
|---|---|---|---|---|---|
| | 200°C | 250°C | 300°C | 350°C | 400°C |
| NO + CO₂ with SO₂ | 100 | 100 | 102 | 100 | 100 |
| NO + CO₂ after SO₂ | 107 | 118 | 117 | 127 | 243 |
| | | | | | |
| C2 | % variation | | | | |
| | 200°C | 250°C | 300°C | 350°C | 400°C |
| NO + CO₂ with SO₂ | 78 | 74 | 82 | 82 | 82 |
| NO + CO₂ after SO₂ | 69 | 74 | 88 | 111 | 111 |

### Test 4 (NO + soot in He)

0.4012 grams of the support PP6889-650 without noble metal (0.250-0.600 mm particles) were mixed with 0.1005 grams of synthetic soot and placed over the quartz flow micro-reactor and heated under He flow at a temperature of reaction (Table 6).

The catalyst-soot mixture was heated in a 200 ml/min. flow of NO (1006 ppm), $O_2$ (10%) and $H_2O$ (3%) remaining He.

At the end of ramp (500°C) the support PP 6889-650 showed 62.5% of soot oxidation.

Without the noble metal the PP 6889-650 can not reduce the NO feed and the reductions of NO is 0% (average for all test). The soot is largely converted to $CO_2$ below 440°C (Fig. 3).

*Table 6: Scheme of the catalytic tests with soot*

| | TEMPERATURE | |
|---|---|---|
| | **150°C** | **1 min.** |
| | **150-450°C (ramp 2°C/min.)** | **150 min.** |
| **Test with soot** | *450°C* | **10 min.** |
| | ***450-500°C (ramp 2°C/min.)*** | **25 min.** |
| | **500°C** | **10 min.** |

### Test 5 (NO + soot in He)

### Catalyst C1, comparative C2 and C3

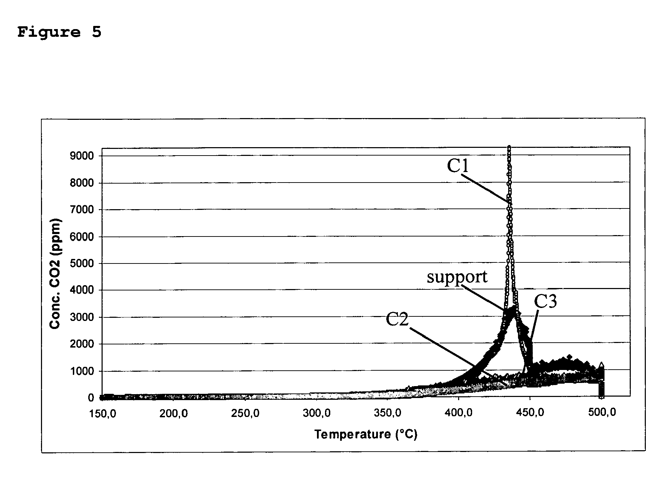

The soot oxidations of the catalysts C1, C2 and C3 were compared as a function of the reaction temperature (Fig. 5).

The soot oxidation and $NO_x$ activity were studied by mass spectrometry and chemiluminescence. The catalyst-soot mixture was heated in a 200 ml/min. flow of NO (1006 ppm), $O_2$ (10%) and $H_2O$ (3%) remaining He.

**C1:** 0.3620 grams of the catalyst were mixed with 0.0905 grams of synthetic soot and placed over the quartz flow micro-reactor and heated under He flow at temperature of reaction (following the scheme of Table 7).

**C2:** 0.4003 grams of the catalyst were mixed with 0.1008 grams of synthetic soot and placed over the quartz flow micro-reactor and heated under He flow at a temperature of reaction (following the scheme of Table 7).

**C3:** 0.5040 grams of the catalyst were mixed with 0.1250 grams of synthetic soot and placed over the quartz flow micro-reactor and heated under He flow at a temperature of reaction (following the scheme of Table 7).

*Table 7: Scheme of the catalytic tests with soot*

| | TEMPERATURE | |
|---|---|---|
| | **150°C** | **1 min.** |
| | **150-450°C** (ramp 2°C/min.) | **150 min.** |
| **Test with soot** | *450°C* | **10 min.** |
| | ***450-500°C (ramp 2°C/min.)*** | **25 min.** |
| | **500°C** | **10 min.** |

The results about soot oxidation and NO reduction are reported in Table 8. For C1 the soot is largely converted to $CO_2$ below 430°C (Fig. 4).

*Table 8: Soot oxidation and NO reduction for the catalysts.*

| Catalyst | Soot oxidation (%) | NO reduction (%) |
|---|---|---|
| C1 | 99 | 40 |
| C2 | 20 | 13 |
| C3 | 70 | 10 |

**Claims**

1. Catalyst for the reduction of nitrogen oxides in exhaust gas comprising a nitrogen storage material consisting of a Mg/Al mixed oxide with a potassium content in the range of 3 to 15 wt%.

2. Catalyst according to claim 1, wherein the Mg/Al ratio of the Mg/Al mixed oxide is in the range of from 1.5 to 3.5.

3. Catalyst according to claim 3 with a BET surface of >50 $m^2$/g

4. Catalyst according to claim 3, wherein the Mg/Al mixed oxide material is a hydrotalcite compound.

5. Catalyst according to claim 4, wherein the hydrotalcite compound is selected from $Mg_6Al_2(OH)_{18}\cdot$ 4 $H_2O$, $Mg_6Al_2(CO_3)(OH)_{16} \cdot 4H_2O$, $Mg_{0.67}Al_{0.33} (OH)_2Cl_{0.33} \cdot 0.6H_2O$, $Mg_{0.69}Al_{0.31}(OH)_{2.013}(CO_3)_{0.15}\cdot 0.3\ H_2O$, $Mg_{0.74}Al_{0.26}(OH)2(CO_3)_{0.13}\cdot 0.39H_2O$, $Mg_{0.67}Al_{0.33}(OH)_2(CO_3)_{0.16}\cdot 0.69H_2O$, and $Mg_{0.66}Al_{0.34}(OH)_2(CO_3)_{0.17}\cdot 0.70H_2O$

6. Catalyst according to claim 5, further comprising a metal from the platinum group.

7. Catalyst according to claim 7, wherein the metal of the platinum group is present in an amount of 0.2 to 2 wt%.

8. Catalyst according to claim 7, wherein the metal of the platinum group is platinum.

9. Process for the preparation of a catalyst according to anyone of claims 1 to 8 comprising the steps of

   a) Providing an aqueous KOH solution
   b) Addition of $Al(OH)_3$
   c) Addition of a $MgCO_3$ suspension
   d) Stirring
   e) Isolating the product

10. Process according to claim 9, wherein step b) is carried out at a temperature in the range of 60-90°C.

11. Process according to claim b) wherein $Al(OH)_3$ is added as a solid.

12. Process according to claim 11, wherein the isolation of the product is carried out by filtering.

13. Process according to anyone of the preceding claims, wherein the stirring step d) is carried out in a temperature range from 70 to 100°C.

14. Process according to claim 13, wherein the KOH solution in step a) has a concentration of 50 Vol%.

15. Process according to claim 14 wherein the molar ratio of the starting materials $Al(OH)_3$/KOH/$MgCO_3$ is in the range of 1/0.5/0.9 to 1/2.1/3.

16. Process according to anyone of the preceding claims wherein the filtered product is impregnated with an aqueous solution of a metal salt from the platinum group.

17. Process according to claim 16, wherein the product is calcined after impregnation.

18. Catalyst obtainable by a process according to anyone of the preceding claims 9 to 17.

19. Use of a catalyst according to anyone of claims 1 to 8 or 18 for simultaneous oxidation of soot and the reduction of nitrogen-oxides.

**Figure 1**

**Figure 2**

**Figure 3**

**Figure 4**

Figure 5

Europäisches
Patentamt

European
Patent Office

Office européen
des brevets

# EUROPEAN SEARCH REPORT

**Application Number**

EP 08 01 4006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG ET AL: "Diesel soot combustion on potassium promoted hydrotalcite-based mixed oxide catalysts" CATALYSIS COMMUNICATIONS, ELSEVIER SCIENCE, AMSTERDAM, NL, vol. 8, no. 11, 1 November 2007 (2007-11-01), pages 1621-1624, XP022262195 ISSN: 1566-7367 * abstract * * paragraphs [1.INTRODUCTION], [2.EXPERIMENTAL]; table 1 * ----- | 1-6, 9-15, 17-19 | INV. B01J23/00 B01J23/58 B01D53/94 B01J21/16 B01J27/236 C01F7/00 |
| X | CN 1 775 350 A (UNIV JINAN [CN]) 24 May 2006 (2006-05-24) * claims 1,2,5; example 4; tables * ----- | 1-19 | |
| X | WO 2007/005795 A (ALBEMARLE NETHERLANDS BV [NL]; STAMIRES DENNIS [US]; O'CONNOR PAUL [NL] 11 January 2007 (2007-01-11) * claims 1-4; example 1 * ----- | 1-6, 9-15,17, 18 | |
| D,A | US 2003/125202 A1 (RUWISCH LUTZ MARC [DE] ET AL RUWISCH LUTZ MARC [DE] ET AL) 3 July 2003 (2003-07-03) * paragraphs [0064] - [0068]; claims 1,3,8; examples * * paragraphs [0035], [0048] * ----- | | TECHNICAL FIELDS SEARCHED (IPC) B01J B01D C01F |
| D,A | US 6 517 795 B1 (NOWECK KLAUS [DE] ET AL) 11 February 2003 (2003-02-11) =EP0807086 ----- | | |

The present search report has been drawn up for all claims

| Place of search | Date of completion of the search | Examiner |
|---|---|---|
| Munich | 5 March 2009 | Holzwarth, Arnold |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

## ANNEX TO THE EUROPEAN SEARCH REPORT
## ON EUROPEAN PATENT APPLICATION NO.

EP 08 01 4006

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2009

| Patent document cited in search report | | Publication date | Patent family member(s) | | Publication date |
|---|---|---|---|---|---|
| CN 1775350 | A | 24-05-2006 | NONE | | |
| WO 2007005795 | A | 11-01-2007 | CA | 2613470 A1 | 24-12-2007 |
| | | | CN | 101208410 A | 25-06-2008 |
| | | | EP | 1899436 A1 | 19-03-2008 |
| | | | JP | 2008544850 T | 11-12-2008 |
| US 2003125202 | A1 | 03-07-2003 | BR | 0207597 A | 02-12-2003 |
| | | | CA | 2413171 A1 | 30-05-2003 |
| | | | CN | 1457921 A | 26-11-2003 |
| | | | CN | 1806912 A | 26-07-2006 |
| | | | EP | 1316354 A1 | 04-06-2003 |
| | | | JP | 2003210988 A | 29-07-2003 |
| | | | JP | 2008100230 A | 01-05-2008 |
| | | | JP | 2008132491 A | 12-06-2008 |
| | | | KR | 20030044878 A | 09-06-2003 |
| | | | RU | 2292236 C2 | 27-01-2007 |
| | | | ZA | 200209686 A | 09-07-2003 |
| US 6517795 | B1 | 11-02-2003 | WO | 9623727 A1 | 08-08-1996 |
| | | | DE | 19503522 A1 | 08-08-1996 |
| | | | DK | 807086 T3 | 27-12-1999 |
| | | | EP | 0807086 A1 | 19-11-1997 |
| | | | ES | 2139331 T3 | 01-02-2000 |
| | | | JP | 4057647 B2 | 05-03-2008 |
| | | | JP | 10513145 T | 15-12-1998 |
| | | | US | 6180764 B1 | 30-01-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6858193 B

- EP 807086 A1